# EUROPÄISCHE PATENTANMELDUNG

(11) **EP 1 336 775 A2**
(43) Veröffentlichungstag der Anmeldung: **20.08.2003**
(21) Anmeldenummer: 03000719.9
(22) Anmeldetag: 13.01.2003
(51) Int. Cl.: F16H 63/22, F16H 63/32

(54) **Doppelte Schaltgabel für Schaltgetriebe**

(30) Priorität: 16.02.2002 DE 10206470
(71) Anmelder: Bayerische Motoren Werke Aktiengesellschaft, 80809 München (DE)
(72) Erfinder: Körber, Martin, 85375 Neufahrn (DE)

(57) **Zusammenfassung**

Schaltgetriebe mit zwei nebeneinander angeordneten "Zahnradstufen" (20,21,22,23;25,24), wobei jede der beiden Zahnradstufen durch zwei miteinander kämmende Zahnräder gebildet ist. Einander zugeordnete Zahnräder der beiden Zahnradstufen sind jeweils koaxial angeordnet, das heißt sie haben jeweils eine gemeinsame Drehachse. Zwischen den axial benachbarten Zahnrädern der beiden Zahnradstufen ist jeweils eine Schaltmuffe (29,30,33,34) vorgesehen, die entlang der jeweiligen Drehachse verschiebbar ist. Die Schaltmuffen ermöglichen eine Drehkupplung der benachbarten Zahnradpaare. Wesentlich ist, dass die beiden Schaltmuffen in Verschieberichtung miteinander "gekoppelt" sind. Die beiden Schiebemuffen sind also nur gemeinsam verschiebbar.

## Beschreibung

Die vorliegende Erfindung betrifft ein Schaltgetriebe gemäß den Merkmalen des Patentanspruches 1.

Aus der DE 39 39 274 C1 ist ein Wechselgetriebe bekannt, bei dem ein Gang durch axiales Verschieben einer Schaltmuffe geschaltet wird. Die Schaltmuffe stellt zwischen einem drehbar auf einer Welle gelagerten Zahnrad und einer Festmuffe eine in Drehrichtung formschlüssige Verbindung her. Zur Verschiebung der Schaltmuffe ist üblicherweise entweder eine "Schaltgabel" oder eine "Schaltschwinge" vorgesehen.

Eine Schaltgabel sitzt formschlüssig auf einer zu ihrer Lagerung und Führung dienenden Schaltstange und greift in eine am Außenumfang der Schaltmuffe vorgesehene umlaufende Ringnut ein. Bei einer axialen Verschiebung der Schaltgabel wird die Schaltmuffe mitgeführt.

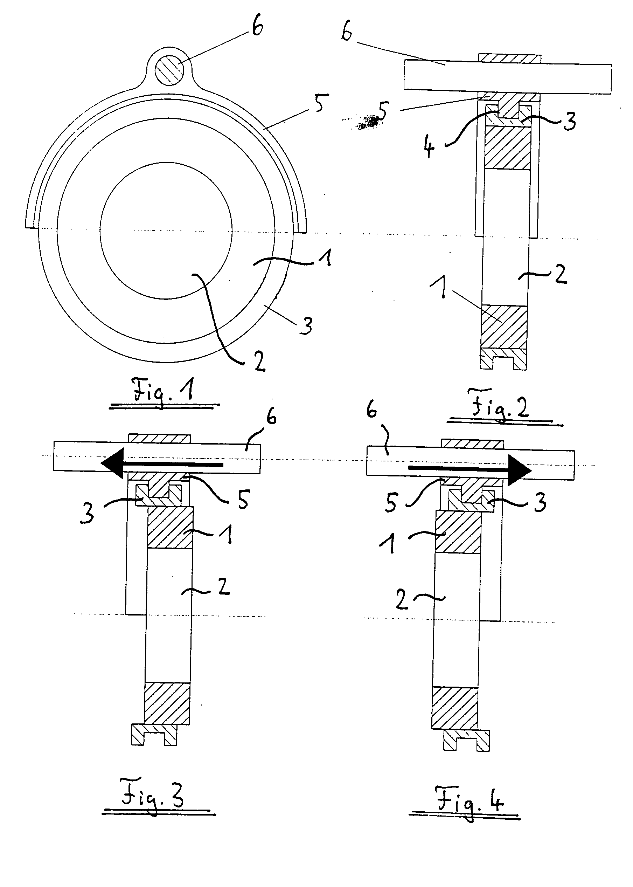

Eine derartige herkömmliche Getriebeschalteinrichtung ist in den Figuren 1 - 4 gezeigt. Dort ist eine Festmuffe 1 drehfest mit einer Welle 2 verbunden. Drehfest auf der Festmuffe 1 ist eine axial verschiebliche Schaltmuffe 3 angeordnet. Die Schaltmuffe 3 weist an ihrem Außenumfang eine umlaufende Nut 4 auf, in die eine Schaltgabel 5 eingreift, die mit einer Schaltstange 6 verbunden ist. Durch Betätigen der Schaltstange 6 kann die Schaltmuffe 3 axial verschoben werden und ein Gang geschaltet werden.

Eine Schaltschwinge hingegen, wie sie beispielsweise aus der DE 199 19 271 A1 bekannt ist, ist U-förmig gestaltet und weist an ihren beiden gegenüberliegenden Schenkeln Schwenklager auf, in die getriebefeste Lagerzapfen eingreifen.

Eine ähnliche Schaltschwinge nach dem Stand der Technik ist in den Figuren 5 - 8 dargestellt. In gegenüberliegenden Schenkeln 8, 9 der Schaltschwinge 7 sind beweglich Gleitsteine 10, 11 gelagert, die in die umlaufende Nut 4 der Schaltmuffe 3 eingreifen. Die Schaltschwinge 7 ist um eine durch Lagerzapfen 12, 13 gebildete Schwenkachse nach "links" bzw. "rechts" schwenkbar, was in den Figuren 6, 7 dargestellt ist. Durch Verschwenken der Schaltschwinge 7 wird die Schaltmuffe 3 axial nach links bzw. rechts verschoben. Für die Schwenkbetätigung der Schaltschwinge 7 ist ein Mitnehmer 14 vorgesehen, der mit einer hier nicht dargestellten Schaltwelle verbunden ist.

Aufgabe der Erfindung ist es, ein Getriebe zu schaffen, das eine geringe Anzahl von Einzelkomponenten aufweist und das eine Vielzahl von Schaltstufen ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Schaltgetriebe mit mindestens zwei nebeneinander angeordneten "Zahnradstufen" aus. Jede der beiden Zahnradstufen ist durch zwei miteinander kämmende Zahnräder gebildet. Einander zugeordnete Zahnräder der beiden Zahnradstufen sind jeweils koaxial angeordnet, das heißt sie haben jeweils eine gemeinsame Drehachse. Zwischen den axial benachbarten Zahnrädern der beiden Zahnradstufen ist jeweils eine Schaltmuffe vorgesehen, die entlang der jeweiligen Drehachse verschiebbar ist. Die Schaltmuffen ermöglichen eine Drehkupplung der benachbarten Zahnradpaare.

Das Grundprinzip der Erfindung besteht nun darin, dass die beiden Schaltmuffen in Verschieberichtung miteinander "gekoppelt" sind. Die beiden Schiebemuffen sind also nur gemeinsam verschiebbar.

Bei einer ersten Ausführungsform der Erfindung sind die beiden Schaltmuffen stets nur in dieselbe Richtung axial verschiebbar. Dies muss aber nicht so sein. Bei einer zweiten Ausführungsform der Erfindung sind die Schaltmuffen so miteinander gekoppelt, dass sie zwar gleichzeitig verschoben werden, aber in entgegengesetzte Richtungen, was später noch ausführlich erläutert wird.

Ähnlich wie bei herkömmlichen Schaltgetrieben weist jede Schaltmuffe mindestens zwei Stellungen auf, nämlich eine "Schaltstellung" und eine "Neutralstellung". In der Schaltstellung sind die nebeneinander angeordneten Zahnräder über die Schaltmuffe drehgekoppelt. In der Neutralstellung hingegegen sind die nebeneinander angeordneten Zahnräder unabhängig voneinander drehbar. Nach einer Weiterbildung der Erfindung ist nun vorgesehen, dass jeweils eine der beiden Schaltmuffen der Zahnradstufen sich in ihrer Schaltstellung findet und die andere Schaltmuffe die Neutralstellung einnimmt oder umgekehrt.

Dies ist in einfacher Weise durch eine mechanische Kopplung der beiden Schaltmuffen in Verschieberichtung erreichbar. Die mechanische Kopplung kann in einfacher Weise durch eine gemeinsame Betätigungseinrichtung gebildet sein. Als Betätigungseinrichtung kann ähnlich wie beim Stand der Technik eine Schaltgabel bzw. eine Schaltschwinge vorgesehen sein, die über Gleitsteine in Nuten eingreifen, welche an den Außenumfängen der beiden Schaltmuffen vorgesehen sind.

Bei der Verwendung einer Schaltgabel sind wiederum verschiedene Varianten denkbar. Die in die beiden Schaltmuffen eingreifende Schaltgabel kann beispielsweise durch eine einzige Schaltstange betätigbar sein, die im Bereich zwischen den beiden Schaltmuffen mit der Schaltgabel verbunden ist und sich im wesentlichen parallel zu den beiden Drehachsen der Zahnradpaare erstreckt.

Bei einer anderen Variante können zwei Schaltstangen vorgesehen sein, die jeweils im Außenbereich der Zahnräder eines Zahnradpaares mit der Schaltgabel verbunden sind.

Bei einer dritten Variante sind insgesamt drei Stangen vorgesehen, nämlich eine Schaltstange, die im Bereich zwischen den beiden Drehachsen der Zahnradpaare mit der Schaltgabel verbunden ist und die als eigentliches Betätigungselement zum Verschieben der Schaltgabel vorgesehen ist. Ferner sind in den Außenbereichen der beiden Zahnräder eines Zahnradpaares jeweils eine Führungsstange vorgesehen, welche die Schaltgabel durchsetzen und ein Verkanten der Schaltgabel beim Verschieben verhindern. In den "Führungsbohrungen" der Schaltgabel können Gleit- oder Wälzlager vorgesehen sein, was die erforderlichen Schaltkräfte verringert und somit den Schaltkomfort verbessert.

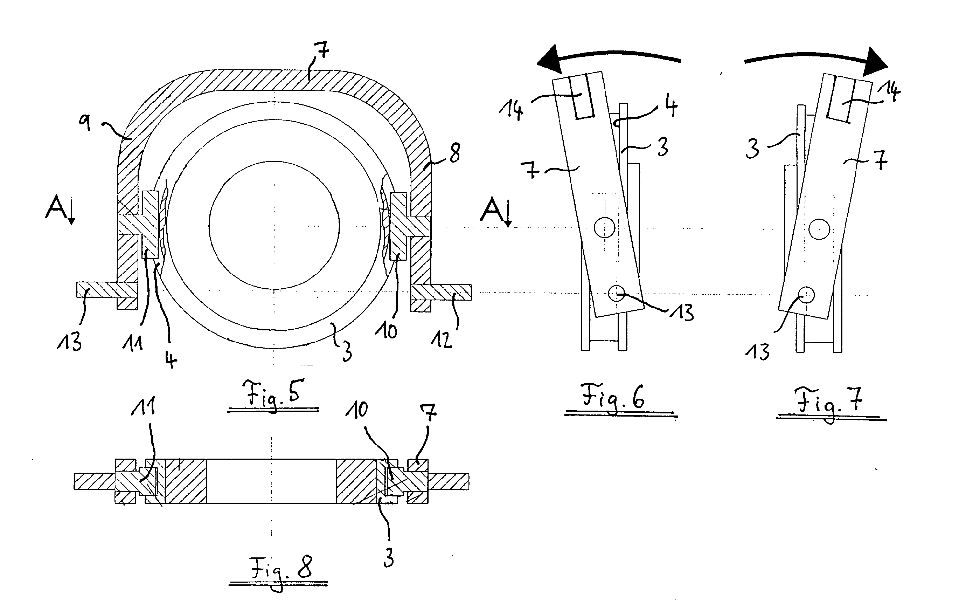

Alternativ zu einer Schaltgabel kann eine Schaltschwinge vorgesehen sein, die über Gleitsteine in die beiden Schaltmuffen eingreift. Die Schaltschwinge ist um eine quer zu den Drehachsen der beiden Zahnradpaare verlaufende Schwenkachse schwenkbar. Die Schaltschwinge hat vorzugsweise die Form eines "U" und übergreift mit ihrem "Querbügel" die beiden Schaltmuffen. Die beiden "Schwenkarme" der U-förmigen Schaltschwinge sind mit getriebefesten Schwenklagern verbunden. An den Innenseiten der beiden Schwenkarme sind, ähnlich wie in den Figuren 5 - 8 dargestellt, Gleitsteine vorgesehen, die in umlaufende Nuten an den Außenumfängen der beiden Schaltmuffen eingreifen.

Nach einer Weiterbildung der Erfindung ist ein zusätzlicher "dritter Arm" vorgesehen, der parallel zu den beiden Schwenkarmen verläuft und mit dem Querbügel der Schaltschwinge verbunden ist. Der dritte Arm erstreckt sich in den Bereich zwischen den beiden Schaltmuffen. An dem dritten Arm können ebenfalls Gleitsteine vorgesehen sein, die in die umlaufende Nuten der Schaltmuffen eingreifen. Diese zusätzlichen Gleitsteine verbessern den Schaltkomfort. Vorzugsweise ist der dritte Arm ebenfalls mit einem getriebefesten Schwenklager verbunden.

Im folgenden wird die Erfindung im Zusammenhang mit der Zeichnung näher erläutert. Es zeigen:

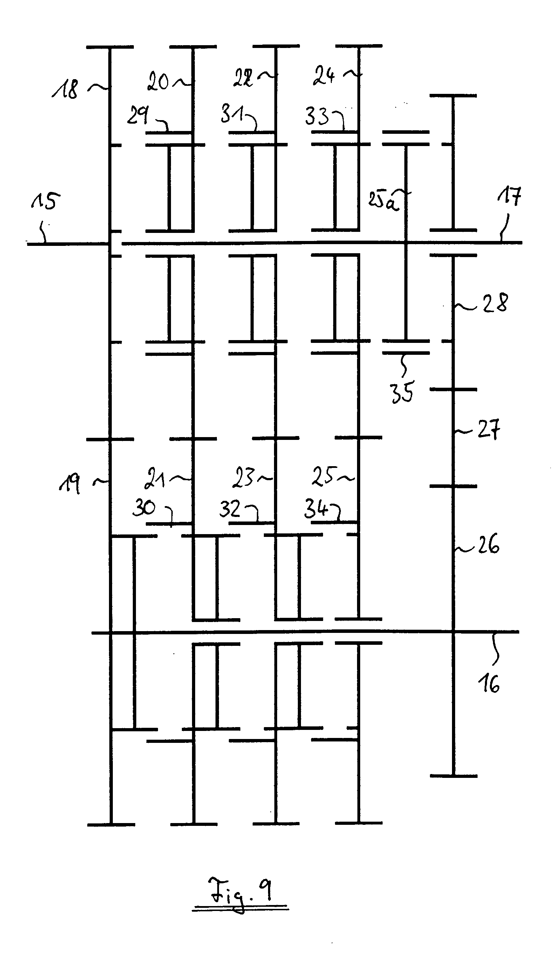

- Figur 9: eine schematische Darstellung eines Getriebes gemäß der Erfindung;

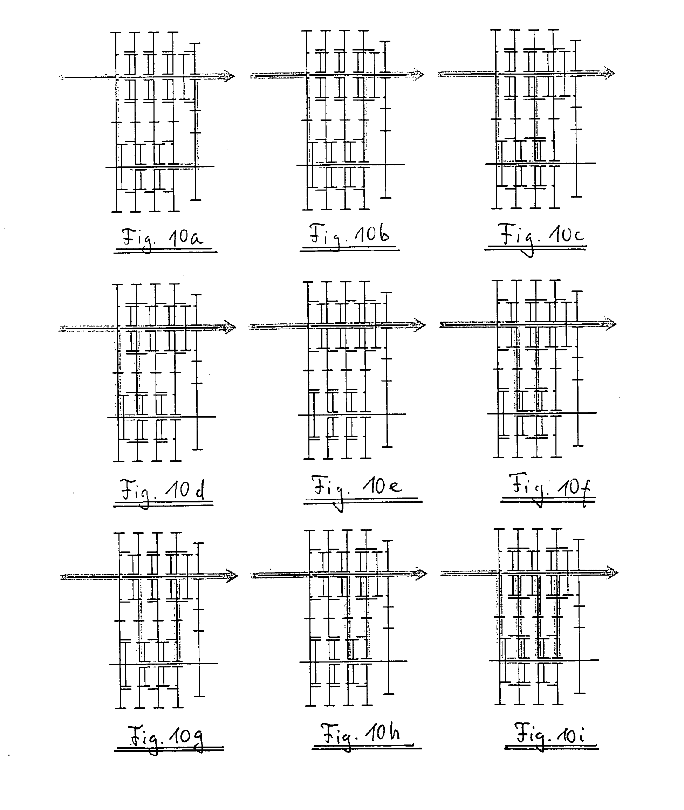

- Figuren 10a - 10i: die möglichen Schaltstellungen des Getriebes der Figur 9;
- Figur 11: eine Logiktabelle zu den Schaltstellungen der Figuren 10a - 10 i;

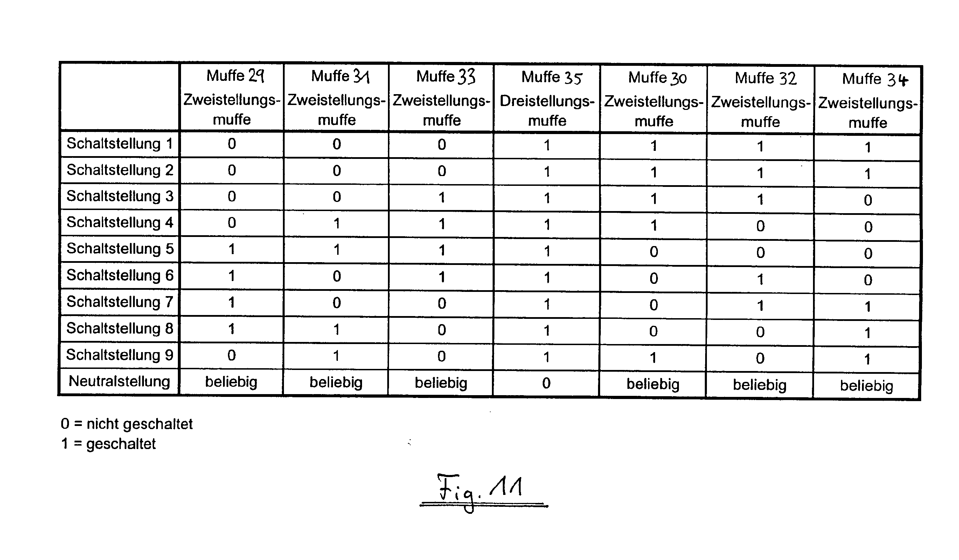

- Figuren 12 - 14: verschiedene Varianten von Schaltgabeln gemäß der Erfindung;

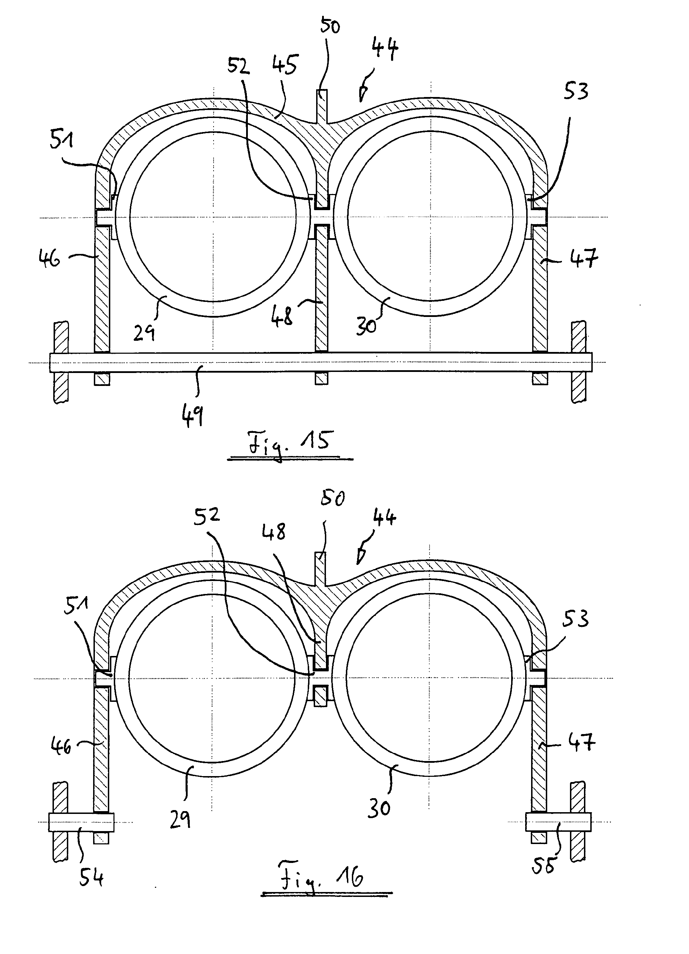

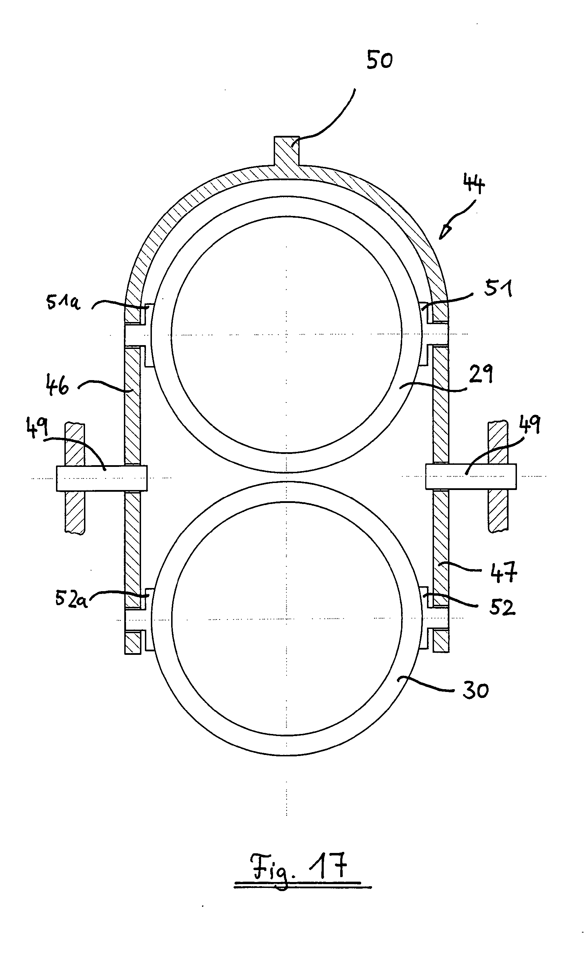

- Figuren 15, 16: verschiedene Varianten von Schaltschwingen gemäß der Erfindung; und
- Figur 17: ein Ausführungsbeispiel, bei dem zwei Schaltmuffen mittels einer Schaltschwinge in entgegengesetzte Richtungen verschiebbar sind.

Figur 9 zeigt ein Schaltgetriebe mit einer Eingangswelle 15, einer Vorgelegewelle 16 und einer Ausgangswelle 17. Es sind vier Vorwärtsgangsradsätze vorgesehen, die jeweils durch ein miteinander kämmendes Zahnradpaar 18, 19 bzw. 20, 21 bzw. 22, 23 bzw. 24, 25 gebildet sind. Ferner ist ein fest mit der Ausgangswelle verbundenes Zahnrad 25a (Festmuffe) vorgesehen, sowie eine Rückwärtsgangstufe, die durch Zahnräder 26 - 28 gebildet ist.

Zwei in Axialrichtung nebeneinanderliegenden Zahnradpaaren sind jeweils zwei miteinander gekoppelte Schaltmuffen 29, 30 bzw. 31, 32 bzw. 33, 34 zugeordnet. Die "Schaltmuffenpaare" 29, 30 bzw. 31, 32 bzw. 33, 34 haben jeweils zwei Schaltstellungen, nämlich eine "linke Schaltstellung" und eine "rechte Schaltstellung". Zu unterscheiden sind ferner die Schaltstellungen der beiden Schaltmuffen eines Schaltmuffenpaares. Jede Schaltmuffe hat eine Schalt- bzw. Eingriffsstellung, in der die in Axialrichtung nebeneinanderliegenden Zahnräder durch die jeweilige Schaltmuffe drehgekoppelt sind. Ferner gibt es eine Neutralstellung, in der nebeneinanderliegende Zahnräder unabhängig voneinander drehbar sind. In **Figur 9** befinden sich die Schaltmuffen 29, 31, 33 in der Neutralstellung und die Schaltmuffen 30, 32, 34 in der Schalt- bzw. Eingriffsstellung.

Wesentlich bei diesem Ausführungsbeispiel ist, dass die beiden Schaltmuffen eines Schaltmuffenpaares sich jeweils in unterschiedlichen Schaltstellungen befinden. Das heißt beispielsweise, wie in **Figur 9** gezeigt, die Schaltmuffe 29 ist in Neutralstellung und die damit gekoppelte Schaltmuffe 30 ist in Schalt- bzw. Eingriffsstellung.

Es wurde bereits erwähnt, dass die beiden Schaltmuffen eines jeden Schaltmuffenpaares in Axial- bzw. Verschieberichtung miteinander gekoppelt sind. Das heißt, es werden stets beide Schaltmuffen eines Schaltmuffenpaares in Axialrichtung verschoben. Wenn beispielsweise das Schaltmuffenpaar 29, 30 nach links verschoben wird, kommt die Schaltmuffe 29 in Schalt- bzw. Eingriffsstellung und die Schaltmuffe 30 in Neutralstellung. Gleiches gilt für die Schaltmuffenpaare 31, 32 und 33, 34. Die beiden Schaltmuffen eines Schaltmuffenpaares werden also immer in die gleiche Richtung bewegt.

Vollständigkeitshalber wird noch auf die Schaltmuffe 35 hingewiesen, die zwei Eingriffsstellungen hat, nämliche eine linke Eingriffsstellung und eine rechte Eingriffsstellung sowie eine Neutralstellung, die der hier gezeigten Mittenstellung entspricht.

Die **Figuren 10a - 10i** zeigen die neun möglichen Schaltstellungen des in **Figur 9** gezeigten Getriebes. **Figur 10a** zeigt den Drehmomentenfluss bei eingelegtem Rückwärtsgang. Die **Figuren 10b - 10i** hingegen zeigen die Drehmomentenflüsse der acht möglichen Vorwärtsgänge. Aus den Stellungen der einzelnen Schaltmuffen ist ersichtlich, dass die Schaltmuffen 29, 30 bzw. 31, 32 bzw. 33, 34 jeweils nur paarweise nach links bzw. rechts verschiebbar sind.

Figur 11 zeigt eine Logiktabelle zu den in den **Figuren 10a - 10i** dargestellten Vorwärtsgangstufen und der Rückwärtsgangstufe sowie einer zusätzlichen Neutralstellung, die in **Figur 9** dargestellt ist.

In den **Figuren 12 - 14** sind jeweils zwei Schaltmuffen eines Schaltmuffenpaares dargestellt, zum Beispiel das Schaltmuffenpaar 29, 30 (vgl. Figur 9). Ferner ist jeweils eine Schaltgabel 36 dargestellt. Die Schaltgabel 36 greift jeweils in an den Außenumfängen der Schaltmuffen 29, 30 vorgesehene umlaufende Nuten ein (vgl. Figur 1- 4).

Beim Ausführungsbeispiel der **Figur 12** ist im Bereich zwischen den beiden Schaltmuffen 29, 30 eine Schaltstange 37 vorgesehen, über die die Schaltgabel 36 gelagert ist und die eine axiale Verschiebung der Schaltgabel 36 und der damit in Eingriff stehenden Schaltmuffen 29, 30 ermöglicht.

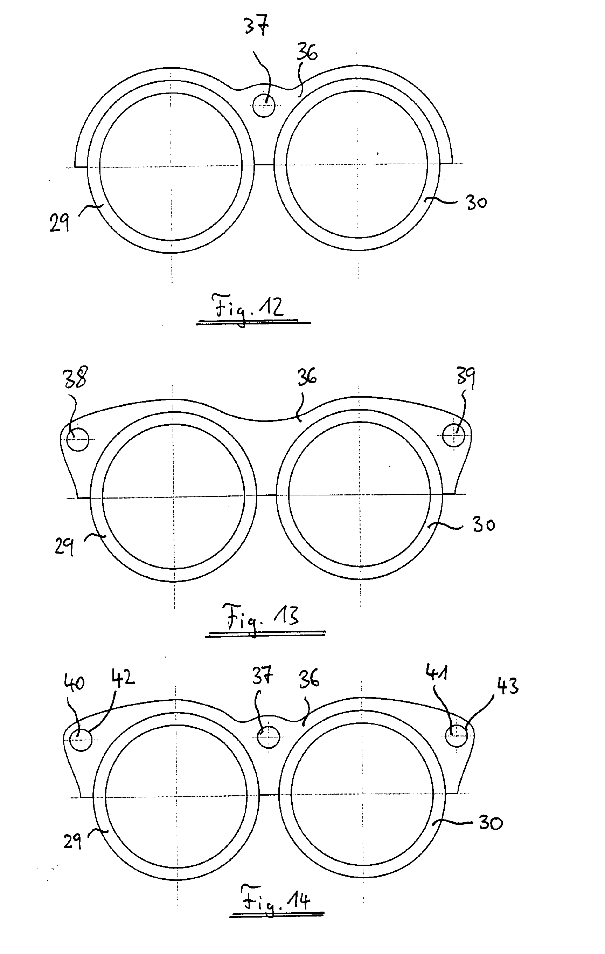

Beim Ausführungsbeispiel der **Figur 13** sind zwei Schaltstangen 38, 39 vorgesehen, die jeweils im "Außenbereich" der Schaltmuffen 29, 30 angeordnet sind. Die beiden Schaltstangen 38, 39 verlaufen parallel zu den Drehachsen der zugeordneten Zahnradpaare bzw. der Schaltmuffen 29, 30 und sind ausschließlich zusammen verschiebbar. Bei diesem Ausführungsbeispiel ist die Schaltgabel 36 doppelt gelagert, was ein Verkanten noch zuverlässiger verhindert.

Beim Ausführungsbeispiel der **Figur 14** ist ähnlich wie bei **Figur 12** in der Mitte eine Schaltstange 37 vorgesehen, die eine axiale Verschiebung der Schaltgabel 36 ermöglicht. Zusätzlich sind in den Außenbereichen der Schaltmuffen 29, 30 zwei Führungsstangen 40, 41 vorgesehen, die zugeordnete Führungsbohrungen 42, 43 der Schaltgabel 36 durchsetzen. Die Führungsstangen 40, 41 können in den Führungsbohrungen 42, 43 gleit-oder wälzgelagert sein. Durch diese "doppelte" Führung der Schaltgabel 36 wird ein Verkanten zuverlässig verhindert.

Die **Figuren 15 und 16** zeigen zwei verschiedene Varianten, bei denen die Schaltmuffen 29, 30 durch eine zugeordnete Schaltschwinge 44 axial verschiebbar sind.

Beim Ausführungsbeispiel der **Figur 15** weist die Schaltschwinge 44 einen "Querbügel" 45 auf, zwei seitliche Schwenkarme 46, 47 sowie einen mittleren Schwenkarm 48, deren Enden jeweils schwenkbar mit einer getriebefest gelagerten Schwenkachse 49 verbunden sind. Der Querbügel 45 "übergreift" die Schaltmuffen 29, 30 und weist in der Mitte einen Schaltfinger 50 auf, über den die Schaltkraft eingeleitet wird. In den beiden Seitenarmen 46, 47 und dem Mittelarm 48 sind jeweils Gleitsteine 51 - 53 vorgesehen, die in umlaufende Nuten am Außenumfang der Schaltmuffen 29, 30 eingreifen.

Beim Verschwenken der Schaltschwinge 44 um die Schwenkachse 49 werden die Schaltmuffen 29, 30 in Axialrichtung, das heißt senkrecht zur Zeichenebene verschoben.

**Figur 16** zeigt eine Variante der Schaltschwinge der **Figur 15**. Bei dieser Variante ist die Schaltschwinge 44 lediglich über die beiden seitlichen Schwenkarme 46, 47 an Schwenkzapfen 54, 55 schwenkbar gelagert. Der mittlere Arm 48 dient hier lediglich als Halter für den Gleitstein 52.

**Figur 17** zeigt ein Ausführungsbeispiel, bei dem die Schaltmuffen 29, 30 in entgegengesetzte Richtungen verschiebbar sind. Ähnlich wie bei den **Fig. 15 und 16** ist eine U-förmige Schaltschwinge 44 vorgesehen, die zwei Schwenkarme 46, 47 aufweist. Die Schaltschwinge 44 ist schwenkbar um eine Schwenkachse 49 gelagert. Die Schwenkachse 49 ist in einem Bereich zwischen den beiden Schaltmuffen 29, 30 angeordnet. Sie liegt hier in der Zeichenebene und verläuft senkrecht zu den senkrecht zur Zeichenebene stehenden "Verschiebeachsen" der beiden Schaltmuffen 29, 30. Ähnlich wie bei den **Fig. 15 und 16** sind die Schaltmuffen 29, 30 in Verschieberichtung über Gleitsteine 51, 51a bzw. 52, 52a mit den Schwenkarmen der Schaltschwinge 44 gekoppelt. Die Schaltkraft wird über einen Schaltfinger 50 in die Schaltschwinge 44 eingeleitet.

Der wesentliche Unterschied gegenüber den oben beschriebenen Ausführungsbeispielen besteht darin, dass sich bei einem Verschwenken der Schaltschwinge 44 um die Schwenkachse 49 die beiden Schaltmuffen 29, 30 in unterschiedliche Richtungen verschieben. Wenn die Schaltmuffe 29 aus der Zeichenebene heraus verschoben wird, wird die Schaltmuffe 30 in die Zeichenebene hinein verschoben bzw. umgekehrt.

Eine derartige Schaltschwinge kann selbstverständlich zusammen mit anderen Schaltschwingen oder Schaltgabeln, bei denen die Schaltmuffen "gleichsinnig" verschoben werden (vgl. Fig. 9-16) in ein Getriebe integriert sein. Hierdurch ergeben sich eine Vielzahl von Schaltungsmöglichkeiten.

## Patentansprüche

1. Schaltgetriebe mit zwei nebeneinander angeordneten Zahnradstufen, die jeweils durch zwei miteinander kämmende Zahnräder (18, 19; 20,21) gebildet sind, wobei die einander zugeordneten Zahnräder (18, 20; 19, 21) der beiden Zahnradstufen (18, 19; 20, 21) koaxial zu einer ersten bzw. zweiten Drehachse (15, 17; 16) angeordnet sind und in Drehrichtung durch jeweils eine Schaltmuffe (29, 30) miteinander koppelbar sind, wobei die beiden Schaltmuffen (29, 30) in Axialrichtung (15, 17; 16) miteinander gekoppelt und nur gemeinsam axial verschiebbar sind.

2. Schaltgetriebe nach Anspruch 1, **dadurch gekennzeichnet, dass** die beiden Schaltmuffen (29, 30) derart durch eine mechanische Kopplungseinrichtung (36, 44) miteinander gekoppelt sind, dass die Schaltmuffen (29, 30) stets nur in die selbe Richtung axial verschiebbar sind.

3. Schaltgetriebe nach Anspruch 1 oder 2, bei dem die Schaltmuffen jeweils eine Schaltstellung aufweisen, in der die einander zugeordneten Zahnräder (18, 20; 19, 21) drehgekoppelt sind und eine Neutralstellung, in der die einander zugeordneten Zahnräder (18, 20; 19, 21) unabhängig voneinander drehbar sind, **dadurch gekennzeichnet, dass** stets die eine Schaltmuffe (30) in ihrer Schaltstellung und die andere Schaltmuffe (29) in ihrer Neutralstellung ist oder umgekehrt.

4. Schaltgetriebe nach einem der Ansprüche 1 bis 3, **dadurch gekennzeichnet, dass** die beiden Schaltmuffen (29, 30) in Verschieberichtung mechanisch miteinander gekoppelt sind.

5. Schaltgetriebe nach einem der Ansprüche 1 bis 3, **dadurch gekennzeichnet, dass** den beiden Schaltmuffen (29, 30) eine gemeinsame Betätigungseinrichtung (36, 44) zugeordnet ist, die in umlaufende Nuten (4) eingreift, die am Außenumfang der beiden Schaltmuffen (29, 30) vorgesehen sind.

6. Schaltgetriebe nach Anspruch 5, **dadurch gekennzeichnet, dass** sich die Betätigungseinrichtung (36, 44) zwischen den beiden Drehachsen der Schaltmuffen (29, 30) erstreckt.

7. Schaltgetriebe nach einem der Ansprüche 1 bis 6, **dadurch gekennzeichnet, dass** den beiden Schaltmuffen (29, 30) eine gemeinsame Schaltgabel (36) zugeordnet ist.

8. Schaltgetriebe nach Anspruch 7, **dadurch gekennzeichnet, dass** die Schaltgabel (36) mit einer Schaltstange (37) verbunden ist, die im Bereich zwischen den beiden Drehachsen der Schaltmuffen (29, 30) angeordnet ist und die sich im wesentlichen parallel zu den Drehachsen (15, 17; 16) erstreckt.

9. Schaltgetriebe nach Anspruch 7, **dadurch gekennzeichnet, dass** die Schaltgabel (36) mit zwei Schaltstangen (38, 39) verbunden ist, die jeweils im Außenbereich der Schaltmuffen (29, 30) angeordnet sind und die sich im wesentlichen parallel zu den Drehachsen (15, 17; 16) erstrecken, wobei die Schaltstangen (38, 39) stets nur gleichsinnig verschiebbar angeordnet sind.

10. Schaltgetriebe nach einem der Ansprüche 1 bis 7, **dadurch gekennzeichnet, dass** die Schaltgabel (36) mit einer Schaltstange (37) verbunden ist, die im Bereich zwischen den beiden Drehachsen (15, 17; 16) angeordnet ist und die sich im wesentlichen parallel zu den Drehachsen (15, 17; 16) erstreckt und dass zwei Führungsstangen (40, 41) vorgesehen sind, die jeweils im Außenbereich der Schaltmuffen (29, 30) angeordnet sind auf denen die Schaltgabel (36) verschiebbar angeordnet ist.

11. Schaltgetriebe nach einem der Ansprüche 1 bis 6, **dadurch gekennzeichnet, dass** den beiden Schaltmuffen (29, 30) eine gemeinsame Schaltschwinge (44) zugeordnet ist, die um eine quer zu den Drehachsen (15, 17; 16) verlaufende Schwenkachse (49; 54, 55) schwenkbar ist.

12. Schaltgetriebe nach Anspruch 11, **dadurch gekennzeichnet, dass** die Schaltschwinge (44) die beiden Schaltmuffen (29, 30) U-förmig übergreift und zwei Schwenkarme (46, 47) aufweist, die schwenkbar um die Schwenkachse (54, 55) gelagert sind.

13. Schaltgetriebe nach Anspruch 12, **dadurch gekennzeichnet, dass** an den Innenseiten der beiden Schwenkarme (46, 47) Gleitsteine (51, 53) vorgesehen sind, die in die umlaufenden Nuten der Schaltmuffen (29, 30) eingreifen.

14. Schaltgetriebe nach einem der Ansprüche 12 oder 13, **dadurch gekennzeichnet, dass** die Schaltschwinge (44) einen dritten Arm (48) aufweist ist, der sich im wesentlichen parallel zwischen die beiden Schaltmuffen (29, 30) erstreckt, wobei am dritten Arm (48) ebenfalls Gleitsteine (52) vorgesehen sind, die in die umlaufenden Nuten (4) der Schaltmuffen (29, 30) eingreifen.

15. Schaltgetriebe nach Anspruch 14, **dadurch gekennzeichnet, dass** der dritte Arm (48) ebenfalls schwenkbar mit der Schwenkachse (49) verbunden ist.

16. Schaltgetriebe nach einem der Ansprüche 11 bis 15, **dadurch gekennzeichnet, dass** die Schaltschwinge (44) im Bereich zwischen den beiden Schaltmuffen (29, 30) einen Betätigungsfinger (50) aufweist.

17. Schaltgetriebe nach einem der Ansprüche 1 oder 3 bis 16, **dadurch gekennzeichnet, dass** die beiden Schaltmuffen (29, 30) derart durch eine mechanische Kopplungseinrichtung (44) miteinander gekoppelt sind, dass die Schaltmuffen (29, 30) stets nur in einander entgegengesetzte Richtungen axial verschiebbar sind.

18. Schaltgetriebe nach einem der Ansprüche 1 oder 3 bis 6 oder 17, **dadurch gekennzeichnet, dass** den beiden Schaltmuffen (29, 30) eine gemeinsame Schaltschwinge (44) zugeordnet ist, die um eine quer zu den Drehachsen verlaufende Schenkachse (49) schwenkbar ist und dass die Schwenkachse (49) in einem Bereich zwischen den Drehachsen angeordnet ist, wobei ein Verschwenken der Schaltschwinge (44) zu einer Verschiebung der beiden Schaltmuffen (29, 30) in einander entgegengesetzte Richtungen führt.
